# EUROPÄISCHE PATENTANMELDUNG

(11) **EP 1 077 394 A1**
(43) Veröffentlichungstag der Anmeldung: **21.02.2001**
(21) Anmeldenummer: 00116649.5
(22) Anmeldetag: 02.08.2000
(51) Int. Cl.: G03G 7/00, B44C 1/17, G03G 9/097, G03G 9/087, B60C 13/00

(54) **Verfahren zur Übertragung von Tonern und Toner mit vulkanisierbaren Kautschuk- und/oder Gummiwerkstoffen**

(30) Priorität: 12.08.1999 DE 19937637; 15.01.2000 DE 10001461
(71) Anmelder: Zimmer, Michael, 66133 Saarbrücken (DE)
(72) Erfinder: Die Erfindernennung liegt noch nicht vor
(74) Vertreter: Fleck, Hermann-Josef, Dr.-Ing.

(57) **Zusammenfassung**

Die Erfindung betrifft ein Verfahren bzw. eine Farbzusammensetzung zum Beschichten von Gummi-, gummiähnlichen-, Naturkautschuk- oder Kunstkautschuk-Produkten. Zur Verbesserung der Wirtschaftlichkeit des Druckvorganges ist es erfindungsgemäß vorgesehen, dass die elektrostatische Eigenschaften aufweisende Farbzusammensetzung mittels eines elektrophotographischen Druckverfahrens auf die Produktoberfläche aufgebracht wird.

## Beschreibung

Die Erfindung betrifft ein Verfahren zum zumindest teilweisen Beschichten von Gummi-, gummiähnlichen-, Naturkautschuk- oder Kunstkautschuk-Produkten, wobei auf die Produktoberfläche eine Farbzusammensetzung aufgebracht wird, und wobei die Farbzusammensetzung auf der Produktoberfläche zur Anhaftung gebracht wird.

Die Erfindung bezieht sich auch auf eine Farbzusammensetzung.

Zur Dekoration oder Kennzeichnung vom Gummi- oder gummiähnlichen Produkten werden im Stand der Technik lösungsmittelhaltige Farbzusammensetzungen eingesetzt. Diese werden mittels Siebdruck- oder Tampondruckverfahren auf die zu bedruckenden Werkstoffe aufgebracht und anschließend beispielsweise aufvulkanisiert, thermoplastisch verbunden oder unter Temperatureinwirkung ausgehärtet. Im industriellen Einsatz müssen relativ große und teure Druckmaschinen eingesetzt werden. Diese lassen sich insbesondere mit erheblichem Aufwand in eine bereits bestehende Fertigungslinie integrieren. Darüberhinaus müsen infolge der abdampfenden Lösungsmittel aufwendige Arbeitsschutzmaßnahmen getroffen werden.

Ein weiterer Nachteil der bekannten Verfahren ist, dass sich eine wirtschaftliche Produktion erst ab einer gewissen Mindeststückzahl durchführen läßt. Diese Mindeststückzahl wird durch den Maschinenrüstaufwand und die Kosten zur Herstellung der Druckvorlagen bestimmt.

Es ist Aufgabe der Erfindung, ein Verfahren, bzw. eine Farbzusammensetzung der eingangs erwähnten Art bereitzustellen, wobei ein wirtschaftliches Bedrucken von kleinen Losgrößen einfach durchzuführen ist.

Diese Aufgabe wird nach dem erfindungsgemäßen Verfahren dadurch gelöst, dass die elektrostatische Eigenschaften aufweisende Farbzusammensetzung mittels eines elektrophotographischen Druckverfahrens aufgebracht wird.

Mit diesem Verfahren lassen sich bereits Einzeldrucke wirtschaftlich anfertigen. Der Maschinenaufwand ist vergleichsweise gering, da im Wesentlichen auf technisch ausgereifte Druckvorrichtungen, beispielsweise Laserdrucker zurückgegriffen werden kann. Diese lassen sich auch problemlos in eine bereits bestehende Fertigungseinheit nachträglich integrieren. Insbesondere kann mit dem erfindungsgemäßen Verfahren auch auf den Einsatz der problematischen Lösungsmittel verzichtet werden. Das erfindungsgemäße Verfahren eignet sich beispielsweise für die Direkt-Bedruckung von Fußboden-Gummiplatten, Gummidächern oder Gummifolien.

Gemäß einer bevorzugten Ausgestaltungsvariante der Erfindung ist es vorgesehen, dass die Farbzusammensetzung auf einen Zwischenträger aufgebracht wird, dass der Zwischenträger mit der beschichteten Seite auf die Produktoberfläche aufgelegt wird, und dass die Verbindung zwischen dem Zwischenträger und der Farbzusammensetzung aufgehoben und der Zwischenträger entfernt wird.

Dank des Zwischenträgers kann die Druckvorrichtung abseit des Ortes aufgestellt werden, an dem der eigentliche Beschichtungsvorgang stattfindet.

Die vorstehend beschriebene Aufgabe wird auch unter Verwendung einer Farbzusammensetzung gelöst, die dergestalt ist, dass die Kautschuk und/oder Gummiwerkstoffe Bestandteile eines etektrophotographisch verarbeitbarem Toner sind. Der Toner kann zusätzlich noch Bindemittel und in Pigmentform vorliegende Farbstoffe aufweisen. Mit dieser Farbzusammensetzung läßt sich ein wirtschaftliches Bedrucken mit den oben erwähnten Vorteilen verwirklichen.

Bevorzugterweise sind die vulkanisierbaren Kautschuk- und/oder Gummiwerkstoffe der Farbzusammensetzung aus der Gruppe: Polyisopren, Chlorkautschuk, Cyclokautschuk, Butadienkautschuk, Styrol-Butadien-Kautschuk, Nitril-Butadien-Kautschuk, Isoprenkautschuk, Chloropren-Kautschuk, Butyl-Kautschuk, Acryeat-Kautschuk, Athylen-Vinylacetat-Kautschuk, chlorsulfiniertes Polyathylen, Polyurethan und/oder Silikonkautschuk ausgewählt.

Der Anteil an vulkanisierbaren Kautschuk- und/oder Gummiwerkstoffen sollte zwischen und 5 und 100 Gewichts-% betragen. Bei einem Anteil von 100 Gewichts-% kann der Kautschuk- und/oder Gummiwerkstoff vorgefärbt sein. Das Kautschuk- und/oder Gummimaterial wirkt selbst als Bindemittel. Zur Realisierung unterschiedlicher Schichtdicken kann die mittlere Farbzusammensetzungs-Teilchengröße 1 bis 500 µm betragen.

Gemäß einer denkbaren Erfindungsausgestaltung ist es vorgesehen, dass die Farbzusammensetzung Ladungssteuerungsmittel und/oder Mittel zur Verbesserung der Fließfähigkeit enthält.

Die Erfindung bezieht sich auf auch die Verwendung einer Farbzusammensetzung, wie sie vorstehend beschrieben ist, wobei die Farbzusammensetzung zur Beschriftung von Keilriemen oder Autoreifen mit Individualisierungskennzeichen, beispielsweise Barcodes verwendet ist.

## Patentansprüche

1. Verfahren zum zumindest teilweisen Beschichten von Gummi-, gummiähnlichen-, Naturkautschuk- oder Kunstkautschuk-Produkten, wobei auf die Produktoberfläche eine Farbzusammensetzung aufgebracht wird, und wobei die Farbzusammensetzung auf der Produktoberfläche zur Anhaftung gebracht wird,
dadurch gekennzeichnet,
dass die elektrostatische Eigenschaften aufweisende Farbzusammensetzung mittels eines elektrophotographischen Druckverfahrens aufgebracht wird.

2. Verfahren nach Anspruch 1,
dadurch gekennzeichnet,
dass die Farbzusammensetzung auf einen Zwischenträger aufgebracht wird,
dass der Zwischenträger mit der beschichteten Seite auf die Produktoberfläche aufgelegt wird, und
dass die Verbindung zwischen dem Zwischenträger und der Farbzusammensetzung aufgehoben und der Zwischenträger entfernt wird.

3. Farbzusammensetzung zum zumindest teilweisen Beschichten von Gummi-, gummiähnlichen-, Naturkautschuk- oder Kunstkautschuk-Produkten mit vulkanisierbaren Kautschuk- und/oder Gummiwerkstoffen und Farbstoffen,
dadurch gekennzeichnet,
dass die Kautschuk und/oder Gummiwerkstoffe Bestandteile eines elektrophotographisch verarbeitbarem Toner sind.

4. Farbzusammensetzung nach Anspruch 3,
dadurch gekennzeichnet,
dass der Toner Bindemittel und/oder Farbstoffe in Pigmentform aufweist.

5. Farbzusammensetzung nach Anspruch 3 oder 4,
dadurch gekennzeichnet,
dass die vulkanisierbaren Kautschuk- und/oder Gummiwerkstoffe aus der Gruppe:
Polyisopren, Chlorkautschuk, Cyclokautschuk, Butadienkautschuk, Styrol-Butadien-Kautschuk, Nitril-Butadien-Kautschuk, Isoprenkautschuk, Chloropren-Kautschuk, Butyl-Kautschuk, Acryeat-Kautschuk, Athylen-Vinylacetat-Kautschuk, chlorsulfiniertes Polyathylen, Polyurethan und/oder Silikonkautschuk
ausgewählt sind.

6. Farbzusammensetzung nach einem der Ansprüche 3 bis 5,
dadurch gekennzeichnet,
dass der Anteil an vulkanisierbaren Kautschuk- und/oder Gummiwerkstoffen 5 Gewichts-% bis 100 Gewichts-% beträgt.

7. Farbzusammensetzung nach einem der Ansprüche 1 bis 6,
dadurch gekennzeichnet,
dass die mittlere Farbzusammensetzung-Teilchengröße 1 bis 500 µm beträgt.

8. Farbzusammensetzung nach einem der Ansprüche 1 bis 7,
dadurch gekennzeichnet,
dass sie Ladungssteuerungsmittel und/oder Mittel zur Verbesserung der Fließfähigkeit enthält.
